# EUROPÄISCHE PATENTANMELDUNG

(11) **EP 4 692 516 A1**
(43) Veröffentlichungstag der Anmeldung: **11.02.2026**
(21) Anmeldenummer: 25187561.3
(22) Anmeldetag: 04.07.2025
(51) Int. Cl.: F01M 1/10, F01M 5/00, F16N 7/38

(54) **SYSTEM ZUR FLUIDVERSORGUNG**

(30) Priorität: 08.08.2024 DE 102024002582
(71) Anmelder: Hydac Filtertechnik GmbH, 66280 Sulzbach/Saar (DE)
(72) Erfinder: Schmidt, Armin, 66557 Illingen (DE)
(74) Vertreter: Bartels und Partner, Patentanwälte

(57) **Zusammenfassung**

1. System zur Fluidversorgung
2. System zur Fluidversorgung mindestens eines Verbrauchers (V), insbesondere zur Schmiermittelversorgung von Verbrauchern (V), wie Lagerstellen in Getrieben von Windkraftanlagen einschließlich Gleitlagern, zumindest bestehend aus einer
- Fördereinrichtung (12),
- Filtereinrichtung (14), und
- Wärmetauscheinrichtung (16),
die über fluidführende Leitungen (18, 20) miteinander verbunden und im Rahmen einer Fluidführung (24) entlang einer Strömungsrichtung (26) mit Fluid durchströmbar sind, dadurch gekennzeichnet, dass in Strömungsrichtung (26) gesehen hinter der Filtereinrichtung (14) eine Ausschleuseinrichtung (28) in die Fluidführung (24) geschaltet ist, die in mindestens einem Betätigungszustand das Fluid aus der Fluidführung (24) zumindest teilweise ausschleust und zumindest in einem anderen Betätigungszustand in der Fluidführung (24) in Richtung des jeweiligen Verbrauchers (V) belässt.

## Beschreibung

Die Erfindung betrifft ein System zur Fluidversorgung mindestens eines Verbrauchers, insbesondere zur Schmiermittelversorgung von Verbrauchern, wie Lagerstellen in Getrieben von Windkraftanlagen einschließlich Gleitlagern, zumindest bestehend aus einer
- Fördereinrichtung,
- Filtereinrichtung, und
- Wärmetauscheinrichtung,
die über fluidführende Leitungen miteinander verbunden und im Rahmen einer Fluidführung, vorzugsweise in dieser Reihenfolge, entlang einer Strömungsrichtung, vorzugsweise hintereinander, mit Fluid durchströmbar sind.

Durch DE 10 2009 018 969 A1 ist eine Schmierstoff-Fördereinrichtung bekannt, insbesondere für einen Verbraucher einer Windenergieanlage, vorzugsweise für ein Getriebe einer Windenergieanlage, mit zumindest einer Filter-Pumpeneinheit, bestehend aus einer Schmiermittel-Pumpe, einem Antriebsmotor für die Schmiermittel-Pumpe, und einer Filtervorrichtung für das Schmiermittel, wobei die Schmiermittel-Pumpe in einem Schmiermittelbehälter angeordnet ist, wobei eine Schmiermittelabströmleitung in dem Schmiermittelbehälter von der Schmiermittel-Pumpe weggeführt und durch eine Wand des Schmiermittelbehälters zu dem Verbraucher und/oder zu der Filtervorrichtung geführt ist.

Dergestalt sind mögliche Leckagestellen innerhalb der Schmiermittel-Fördereinrichtung derart angeordnet, dass möglicherweise austretendes Schmiermittel direkt dem Schmierstoffvorrat in dem Schmiermittelbehälter wieder zugeführt ist und es insoweit zu keinerlei Verschmutzungen kommen kann.

Durch DE 10 2011 008 672 A1 ist eine Vorrichtung zum Schmieren eines Getriebes sowie eines Lagers, insbesondere in Form eines Rotorlagers bei einer Windkraftanlage bekannt, wobei dem Getriebe und dem Lager jeweils mindestens ein Schmierkreislauf der Vorrichtung zugeordnet ist, in dem im Betrieb der Vorrichtung jeweils ein Schmiermedium strömt, wobei die Vorrichtung ferner eine Wärmetauscheinrichtung für einen Wärmetransport zwischen dem Schmierkreislauf des Getriebes und dem Schmierkreislauf des Lagers aufweist, und wobei die Wärmetauscheinrichtung im Betrieb der Vorrichtung eine Differenz zwischen der Temperatur des Schmiermediums in dem Schmierkreislauf des Getriebes und der Temperatur des Schmiermediums in dem Schmierkreislauf des Lagers durch Wärmeanpassung zumindest teilweise ausgleicht.

Dergestalt kann im Betrieb der Vorrichtung Wärme von dem, dem Getriebe zugeordneten Schmierkreislauf zu dem, dem Rotorlager zugeordneten Schmierkreislauf übertragen werden. Insoweit nimmt das Schmiermedium des Schmierkreislaufes des Rotorlagers auch bei niedrigen Umgebungstemperaturen einen für die Schmierung günstigeren, insbesondere höheren Temperaturwert an. Gleichzeitig ist erreicht, dass durch die Abfuhr von Wärme von dem Schmiermedium des Schmierkreislaufs des Getriebes das dortige Schmiermedium in einem schmiertechnisch günstigen, insbesondere nicht zu hohen Temperaturbereich betrieben ist.

Ausgehend von diesem Stand der Technik liegt der Erfindung die Aufgabe zugrunde, unter Beibehalten der Vorteile der bekannten Lösungen diese dahingehend weiter zu verbessern, dass ein ungewollter Schmutz- oder Partikeleintrag in Richtung des Verbrauchers, insbesondere in Form eines Getriebes einer Windkraftanlage mit seinen Lagerstellen, mit Sicherheit vermieden ist.

Eine dahingehende Aufgabe löst ein System mit den Merkmalen des Patentanspruches 1 in seiner Gesamtheit.

Dadurch, dass gemäß dem kennzeichnenden Teil des Patentanspruches 1 in Strömungsrichtung gesehen hinter der Filtereinrichtung eine Ausschleuseinrichtung in die Fluidführung geschaltet ist, die in mindestens einem Betätigungszustand das Fluid aus der Fluidführung zumindest teilweise ausschleust und zumindest in einem anderen Betätigungszustand in der Fluidführung in Richtung des jeweiligen Verbrauchers belässt, ist eine Möglichkeit eröffnet, einen möglicherweise unbeabsichtigt auftretenden Verschmutzungs- oder Partikeleintrag aus der Fluidführung respektive aus dem Fluidkreis abzuführen, bevor der jeweilige Verbraucher erreicht ist.

Ein dahingehend zusätzlicher Schmutz- oder Partikeleintrag kann beispielsweise bei der Inbetriebnahme eines neuen Fluidversorgungssystems oder im Rahmen von Wartungs- und Montagearbeiten an bestehenden Anlagen entstehen, bei denen die dem Verbraucher vorgeschaltete Filtereinrichtung noch nicht oder noch nicht vollständig in der Lage ist, die jeweilige Verunreinigung aus der Fluidführung herauszufiltern. Da insbesondere Windkraftanlagen-Getriebe kostenintensiv in der Anschaffung sind und bei diesen Getrieben zusehends Lagerstellen unter Einbindung von Gleitlagern zum Einsatz kommen, die erfahrungsgemäß sehr schmutzempfindlich sind, ist es zwingend notwendig insoweit Abhilfe zu schaffen, was erfindungsgemäß dadurch erfolgt, dass man eben einen verschmutzungs- oder partikelbelasteten Fluidstrom aus der Fluidführung herausschleust, bevor dieser überhaupt zu dem Verbraucher gelangen kann. Selbst wenn es bei einer Neuinbetriebnahme oder im Rahmen der angesprochenen Wartungs- und Montagearbeiten ungewollt zu einem sehr hohen Schmutzanfall im fluidischen Kreis kommen sollte, wäre dies jedenfalls für den Verbraucher im Hinblick auf die angesprochene Ausschleusung des Schmutz- und Partikelanfalls ohne Bedeutung. Die dahingehende Ausschleusung lässt sich mit wenig Komponenten funktionssicher durchführen, so dass auch im harten Offshore-Betrieb die Funktionssicherheit der Ausschleuseinrichtung als Ganzes gewährleistet ist.

Regelmäßig ist in die Fluidführung vor dem Verbraucher auch noch eine Wärmetauscheinrichtung, insbesondere zum Kühlen des Fluids für den angeschlossenen Verbraucher geschaltet, die gleichfalls verschmutzungsempfindlich ist, so dass eine in Fluidströmungsrichtung gesehen vor der Wärmetauscheinrichtung liegende Ausschleusmöglichkeit von großem Vorteil ist. Demgemäß ist bevorzugt vorgesehen, dass in eine fluidführende Leitung der Fluidführung zwischen der Filtereinrichtung und der Wärmetauscheinrichtung die Ausschleuseinrichtung geschaltet ist.

Bei einer bevorzugten Ausführungsform des erfindungsgemäßen Systems ist vorgesehen, dass die Ausschleuseinrichtung auf ihrer Ausschleusseite über eine weitere fluidführende Leitung an einen Vorratstank angeschlossen ist, aus dem die Fördereinrichtung bedarfsweise Fluid in die Fluidführung einspeist. Demgemäß ist es möglich die Fördereinrichtung, die Fluid aus dem Vorratstank entnimmt und in die Fluidführung einspeist, dazu zu verwenden, bei betätigter Ausschleuseinrichtung das ausgeschleuste Fluid mit der Partikelverschmutzung wieder zurück in den Vorratstank für einen erneuten Umlauf zu bringen, wobei dann die Filtereinrichtung innerhalb der Fluidführung die Abreinigung vornimmt, um dergestalt einen Unfiltratstrom in einen Filtratstrom für den Verbraucher überzuführen. Der Vorratstank mit seiner Fluidvorratsmenge kann auch aus einer Getriebewanne bestehen, die den Ölsumpf eines Getriebes aufnimmt.

Hierfür ist bevorzugt vorgesehen, dass die Ausschleuseinrichtung ein Ventil aufweist mit mindestens drei Fluidanschlüssen und mindestens zwei voneinander verschiedenen Betätigungsstellungen. Vorzugsweise ist dabei weiter vorgesehen, dass das Ventil in der einen betätigten Stellung das Ausschleusen von Fluid aus der Fluidführung durchführt und in der anderen oder unbetätigten Stellung das Fluid im Fluidkreis in Strömungsrichtung zur Wärmetauscheinrichtung belässt.

Bei einer weiteren bevorzugten Ausführungsform des erfindungsgemäßen Systems ist vorgesehen, dass das Ventil aus einem 3-Wege-Umschaltventil, auch in handbetätigter Form, oder aus einem 3/2-Wege-Ventil, auch in Form eines elektro-magnetisch ansteuerbaren Stetigventiles, besteht. Sofern das angesprochene Umschaltventil von Hand betätigbar ist, kann das Wartungspersonal vor Ort das Ausschleusen von verschmutztem Fluid zurück in den Vorratstank von Hand vornehmen. Nachteilig an dieser Lösung ist, wenn nach erfolgtem Ausschleusen das Wartungspersonal vergessen sollte das Umschaltventil wieder in seine Ausgangsstellung zu verbringen, was die Fluidführung zum Verbraucher ungewollt und langandauernd unterbrechen könnte.

Demgegenüber ist es von Vorteil, ein elektro-magnetisch betätigbares 3/2-Wege-Ventil vorzusehen mit einer entsprechenden Steuerung, die in jedem Fall sicherstellt, dass vor einer Inbetriebnahme des Verbrauchers jedenfalls die Ausschleusleitung blockiert ist. Unter Verwendung eines Stetigventiles lassen sich die Umschaltvorgänge derart harmonisch gestalten, dass jedenfalls Druckschläge innerhalb der Fluidführung vermieden sind.

Bei einer besonders bevorzugten Ausführungsform des erfindungsgemäßen Systems ist vorgesehen, dass mindestens ein Partikelsensor in die Fluidführung geschaltet ist, vorzugsweise in Strömungsrichtung gesehen zwischen der Fördereinrichtung und der Filtereinrichtung und dass bei einem Überschreiten einer vorgebbaren Verschmutzungsschwelle durch auftretende Partikel der jeweilige Partikelsensor einen Ausschleusvorgang aus der Fluidführung unter Einsatz des jeweiligen Ventils, vorzugsweise automatisch, veranlasst. Durch die Überwachung des Systems mittels eines Partikelsensors lässt sich vorzugsweise automatisch ein Ausschleusen von verschmutztem Fluid im Bedarfsfall einleiten, der dann von der Steuerung auch wieder unterbrochen wird, sobald die Fluidversorgung für den Verbraucher mit Filtrat anläuft. Dergestalt ist in erhöhtem Maße eine Systemsicherheit erreicht.

Vorzugsweise ist des Weiteren vorgesehen, dass
- die Fördereinrichtung eine ansteuerbare Fluidpumpe aufweist, die Fluid aus dem Vorratstank entnimmt und in die Fluidführung einspeist,
- die Filtereinrichtung mindestens einen Partikelfilter aufweist, und
- die Wärmetauscheinrichtung einen Kühler mit einem Bypassventil aufweist, das insbesondere bei einem kalten, hochviskosen Fluid die Fluidströmung durch den Kühler unterbindet oder zumindest drosselt und in einem entsprechend warmen niedrigviskosen Zustand des Fluids den Fluidweg durch den Kühler freigibt.

In weiterer vorteilhafter Ausgestaltung ist das angesprochene Bypassventil unter Verwendung eines Thermo-Bypassventils realisiert; eine Lösung wie sie beispielhaft in EP 2 840 284 B1 aufgezeigt ist.

Gegenstand der erfindungsgemäßen Lösung ist auch ein Verfahren zum Betrieb eines Systems wie vorstehend vorgestellt, wobei zum Vermeiden von Partikelverschmutzung auf einer Verbraucherseite, wie einer Lageranordnung in Getrieben von Windkraftanlagen, etwaig verschmutztes Fluid aus einer zugehörigen Fluidführung mittels einer Ausschleuseinrichtung ausgeschleust wird.

Im Folgenden wird das erfindungsgemäße System anhand eines Ausführungsbeispiels mit verschiedenen Ventilanordnungen nach der Zeichnung näher erläutert. Dabei zeigen in prinzipieller und nicht maßstäblicher Darstellung die
- Figur 1: in der Art eines hydraulischen Schaltplans die wesentlichen Komponenten eines Systems zur Fluidversorgung mindestens eines Verbrauchers;
- Figuren 2 und 3: ebenfalls mit hydraulischen Symbolen gekennzeichnet verschiedene Arten von Ventilen, wie sie bei dem System nach der Figur 1 zum Einsatz kommen.

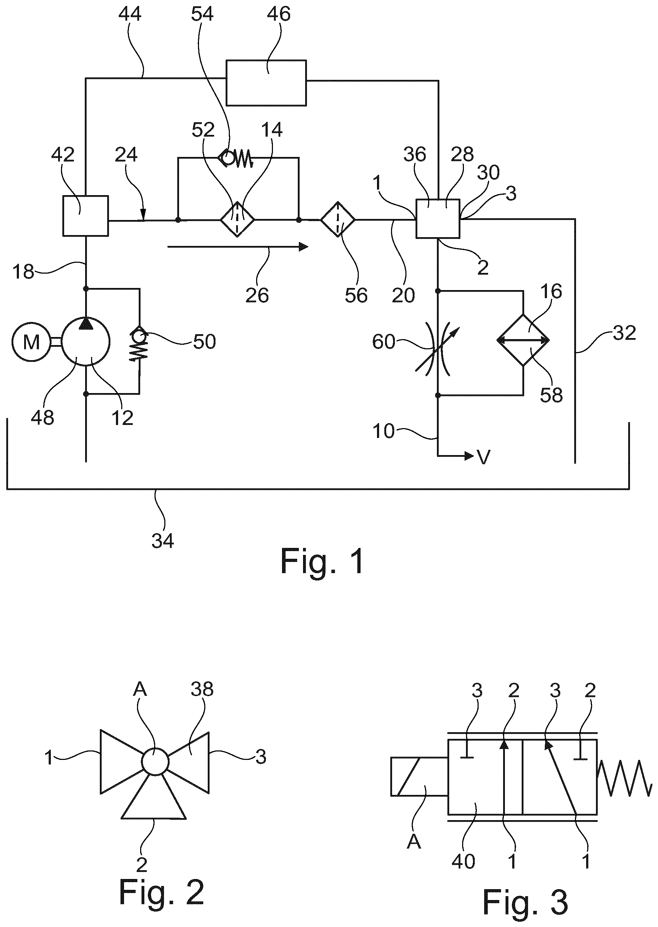

Figur 1 zeigt exemplarisch das erfindungsgemäße System zur Fluidversorgung mindestens eines Verbrauchers V, insbesondere vorgesehen zur Schmiermittelversorgung von Verbrauchern V, wie Lagerstellen in Getrieben von Windkraftanlagen einschließlich Gleitlagern. Da der dahingehende Aufbau von Getrieben mit ihren einzelnen Lagerstellen im Stand der Technik hinreichend bekannt ist, wird auf deren nähere Darstellung verzichtet und mit einem Pfeil versehen ausgangsseitig nur eine Fluidleitung 10 gezeigt, die zu dem jeweiligen Verbraucher V führt.

Das System weist ferner eine Fördereinrichtung 12, eine Filtereinrichtung 14 sowie eine Wärmetauscheinrichtung 16 auf, die über fluidführende Leitungen 18, 20 miteinander verbunden, und im Rahmen einer als Ganzes mit 24 bezeichneten Fluidführung in dieser Reihenfolge entlang einer Strömungsrichtung, die mit einem Pfeil 26 symbolisch wiedergegeben ist, hintereinander mit Fluid, insbesondere mit Schmiermittel oder Kühlschmiermittel, durchströmbar sind.

In Strömungsrichtung 26 gesehen befindet sich hinter der Filtereinrichtung 14 innerhalb der Fluidführung 24 eine Ausschleuseinrichtung 28, die in mindestens einem Betätigungszustand das Fluid aus der Fluidführung 26 zumindest teilweise ausschleust und zumindest in einem anderen Betätigungszustand das Fluid in der Fluidführung 24 in Richtung des jeweiligen Verbrauchers V belässt.

Die Ausschleuseinrichtung 28 ist in die fluidführende Leitung 20 zwischen der Filtereinrichtung 14 und der Wärmetauscheinrichtung 16 geschaltet. Die Ausschleuseinrichtung 28 ist in Blickrichtung auf die Figur 1 gesehen auf ihrer rechten Ausschleusseite 30 über eine weitere fluidführende Leitung 32 ausgangsseitig an einen Vorratstank 34 respektive Ölsumpf einer Getriebewanne angeschlossen, aus dem die Fördereinrichtung 12 bedarfsweise Fluid in die Fluidführung 24 in Richtung des Verbrauchers V einspeist.

Die Ausschleuseinrichtung 28 weist ein Ventil 36 auf, das über mindestens drei Fluidanschlüsse 1, 2, 3 und über mindestens zwei voneinander verschiedene Betätigungsstellungen verfügt. Das Ventil 36 ist in der Figur 1 kastenförmig als Platzhalter wiedergegeben und kann verschiedenste Ventilkonstruktionen beinhalten, wie beispielhaft in den Figuren 2 und 3 gezeigt, die ein 3-Wege-Umschaltventil 38 bzw. ein 3/2-Wegeventil 40 als Stetigventil betreffen. Die korrespondierenden Fluidanschlussstellen des jeweiligen Ventils 36 sind in den Figuren 1 bis 3 mit 1, 2, 3 angegeben, wobei der Anschluss 1 fluidführend mit der Leitung 20 in Verbindung steht, der Anschluss 2 mit der Fluidleitung 10 zum Verbraucher V und der Anschluss 3 mit der weiteren fluidführenden Leitung 32, die die Ausschleuseinrichtung 28 respektive das Ventil 36 mit dem Vorratstank 34 fluidführend verbindet.

Die Symbolik, 1, 2, 3 ist jedenfalls derart gewählt, dass das Ventil 36 in der einen betätigten Stellung das Ausschleusen von Fluid aus der Fluidführung 24 in Richtung der weiteren fluidführenden Leitung 32 zum Vorratstank 34 ermöglicht oder eben in der unbetätigten Stellung das Fluid im Fluidkreis in Form der Fluidführung 24 in Strömungsrichtung 26 zur Wärmetauscheinrichtung 16 belässt.

Insbesondere das Umschaltventil 38 nach der Figur 2 kann mit einem entsprechenden Umschalthebel (nicht dargestellt), was an sich bekannt ist, von Hand zwischen den Betätigungsstellungen verfahren werden. Bevorzugt ist jedoch vorgesehen, dass das Umschaltventil 38 von einem hierfür üblichen Antrieb A, beispielsweise in Form eines Elektromotors, betätigbar ist.

Ferner kann das Ventil 36 auch aus einem 3/2-Wege-Ventil gebildet sein, auch in Form eines elektro-magnetisch ansteuerbaren Stetigventils, wie symbolhaft in Figur 3 dargestellt.

In besonders vorteilhafter Weise ist vorgesehen, dass in die fluidführende Leitung 18 als Teil der Fluidführung 24 ein Partikelsensor 42 geschaltet ist, wie er beispielhaft unter der Markenbezeichnung MCS 1000 series über die Schutzrechtsinhaberin bezogen werden kann. Der dahingehende Sensor 42 dient insbesondere der Erfassung metallischer Feststoffverschmutzung in Schmierflüssigkeiten. Dabei werden die Verschmutzungspartikel mit einem induktiven Messverfahren ermittelt, wobei ein Spulensystem hierfür die Grundlage für den Sensor 42 bildet. Mit dem Partikelsensor 42 der Baureihe MCS ist eine kontinuierliche Zustandsüberwachung der Schmiermittelversorgung ermöglicht, so dass derart ein zuverlässiges Instrument für die zustandsorientierte Instandhaltung von Schmiermittelsystemen erreicht ist. Ein dahingehend geeigneter Sensor 42 ist im Prospekt DE 7.619.8/12.20 der HYDAC International umfänglich beschrieben, so dass an dieser Stelle hierauf nicht mehr näher eingegangen wird.

In einer bevorzugten Ausführungsform kann der Partikelsensor 42 auch wahlweise mit einer Ethernet-Schnittstelle ausgestattet sein, welche der einfachen Einbindung der Sensoren in bestehende Netzwerke dient. Im vorliegenden Fall sei jedoch der Sensor 42 mit einer Datenleitung 44 an eine elektronische Steuereinheit 46 angeschlossen, die die Sensordaten verarbeitet und wird eine vorgebbare Verschmutzungsschwelle überschritten, wird das Ventil 36 für einen Ausschleusvorgang von verschmutztem Fluid zurück in den Vorratstank 34 über die Fluidleitung 32 angesteuert. Detektiert der Sensor 42 keine Verschmutzung mehr wird das Ventil 36 in seine Ausgangsstellung zurückgeschaltet und eine Fluidverbindung zwischen den Anschlussstellen 1 und 2 hergestellt, sprich zwischen der fluidführenden Leitung 20 und der abgabeseitigen Verbraucherleitung 10.

Im Rahmen der weiteren Erläuterung sei noch erwähnt, dass die Fördereinrichtung 12 eine ansteuerbare respektive motorbetriebene Fluidpumpe 48 aufweist, wobei anstelle eines Motors M auch ein Antrieb über eine Getriebemechanik des Windkraftanlagegetriebes in Frage kommt. Die Fluidpumpe 48 ist im Bypass über ein federbelastetes Rückschlagventil 50 abgesichert, das entgegen seiner Federkraft in Richtung des Vorratstankes 34 öffnet.

Die Filtereinrichtung 14 weist des Weiteren einen sogenannten Inlinefilter 52 auf, beispielsweise mit einer Filterfeinheit von 10 *µ*m. Auch der Inlinefilter 52 ist im Bypass mittels eines Umgehungsventils 54 abgesichert, das in der Art eines federbelasteten Rückschlagventiles funktioniert und federbelastet in Richtung des Partikelsensors 42 in seiner Schließstellung gehalten ist. Ist der Inlinefilter 52 von Verschmutzung verblockt, öffnet das dahingehende Umgehung- oder Bypassventil 54 und gibt den Fluidstrom nachfolgend an einen Siebfilter 56 frei, der eine geringere Filterfeinheit aufweist, als der Inlinefilter 52, beispielsweise eine Filterfeinheit von 50 *µ*m aufweist. Insofern dient dann der Siebfilter 56 nur dazu, eventuell noch verbleibende Grobverschmutzung vorsorglich aus der Fluidführung 24 abzuscheiden. Es versteht sich, dass vor dem etwaigen Verblocken des Filters 52 ja bereits mehrfach im Umlauf ein Abfiltrieren der Partikelverschmutzung aus dem Fluidkreis stattgefunden hat, so dass im Regelfall mit Verblocken des Filters 52 nicht zwingend eine grobe Partikelverschmutzung am Siebfilter 56 anfällt.

In die Fluidleitung 10 zwischen der Anschlussstelle 2 des Ventils 36 und dem Verbraucher V ist die Wärmetauscheinrichtung 16 geschaltet, mit dem eigentlichen Kühler 58. Ein solcher Kühler 58 der Wärmetauscheinrichtung 16 kann für eine gute Durchströmung zwischen seinen Lamellen, beispielsweise unterhalb eines Maschinenhauses (nicht dargestellt) einer Gondel einer Windkraftanlage angeordnet sein und zwar bevorzugt in einer Ebene, die zu der der Achsrichtung des Rotors der Anlage entsprechenden Hauptwindrichtung senkrecht angeordnet oder in einem vorgebbaren Winkel geneigt ist. Eine dahingehende Anordnung ist beispielhaft in DE 10 2011 107 013 A1 aufgezeigt. Eine andere Form der Anordnung besteht darin, den jeweiligen Kühler 58 der Wärmetauscheinrichtung 16 auf die Oberseite einer Windkraftgondel anzuordnen, um dergestalt eine freie Durchströmfläche zu erhalten zwecks Maximierung der Kühlleistung. Ein solcher Aufbau ist beispielhaft in DE 10 2012 017 462 A1 aufgezeigt.

Wie sich weiter aus der Figur 1 ergibt, ist im Bypass zum Kühler 58 in die Fluidleitung 10 zum Verbraucher V ein (Thermo-)Bypassventil 60 geschaltet, das insbesondere bei einem kalten, hochviskosen Fluid die Fluidströmung durch den Kühler 58 unterbindet oder zumindest drosselt und in einem entsprechend warmen niedrigviskosen Zustand des Fluids den Fluidweg durch den Kühler 58 freigibt. Eine solche hydraulische Lüftersteuerung ist beispielhaft in EP 2 840 284 B1 aufgezeigt, mit einem die Regelung einer Lüftermotordrehzahl steuernden Thermoventil, welches einen Energiespeicher in Form einer Druckfeder aufweist, die aus einer Formgedächtnislegierung besteht, die eine temperaturabhängige Kraft-Hub-Kennlinie besitzt, die sicherstellt, dass in jedem Fall die benötigte Külleistung für das Fluid bedarfsgerecht eingeregelt wird, bevor es an den jeweiligen Verbraucher V gelangt.

Insbesondere bei einer Neuinstallation des Systems oder im Rahmen von Montage- und Wartungsarbeiten kann innerhalb der Fluidführung 24 ungewollt eine teilweise sehr hohe Partikelverschmutzung auftreten, die den jeweils an das System angeschlossenen Verbraucher V bis zum Unbrauchbarwerden schädigen kann. Durch Betätigen der Ausschleuseinrichtung 28 lässt sich das dahingehende Fluid mit der Partikelverschmutzung entsprechend aus dem Gesamtsystem sicher ausschleusen. Hierfür ist es notwendig die Fördereinrichtung 12 in Betrieb zu nehmen, um die Ausschleusung aktiv veranlassen zu können. Durch Einsatz des Partikelsensors 42 lässt sich dergestalt der jeweilige Ausschleusvorgang fortlaufend überwachen und bedarfsweise unter Einsatz der Steuereinheit 46 auch automatisieren. Ist das Fluid wieder "rein" wird die Versorgung des Verbrauchers V wieder aufgenommen. Der Partikelzähler 42 kann auch aus einem stationären Messgerät für die kontinuierliche Überwachung der Feststoffverschmutzung in Hydraulik- und Schmierölsystemen gebildet sein. Ein dahingehender Partikelsensor kann von der Schutzrechtsinhaberin unter der Markenangabe CS1000 bezogen werden, wobei eine Vielzahl dahingehender Kontaminationssensoren gleicher oder ähnlicher Art eine Bauserie (Series) ausbilden.

Der Partikelsensor CS1000 ist konzipiert für die Montage an Niedrig- und Hochdruckkreisläufen, von denen in der Regel eine kleine Ölmenge zwischen 30 ml/min und 300 ml/min für Messzwecke eingesetzt ist. Ferner ist der genannte Sensor für Druckbereiche zwischen 0 und 100 bar und Viskositäten bis zu 1000 mm²/s ohne Weiteres geeignet. Dabei wird die eigentliche Feststoffverschmutzung in einer optischen Messzelle erfasst.

Die Messergebnisse können als Verschmutzungscode als ISO 4406:1999 und SAE AS 4059(D) ausgegeben werden, ebenso im Rahmen einschlägiger Verschmutzungskassen: > 4*µ*m(c), > 6*µ*m(c), > 14µm(c), >21*µ*m(c). Alle dahingehenden Partikelsensoren haben einen analogen Ausgang und eine RS485 Schnittstelle zur Ausgabe des gemessenen Verschmutzungsgrades. Des Weiteren können alle einen Schaltausgang besitzen, welcher entsprechend eingestellt, bei steigender oder fallender Verschmutzung, schaltet.

Die angesprochenen Verschmutzungscodes oder Verschmutzungsklassen können zum Steuern des Abreinigungsvorganges eingesetzt werden, indem beispielsweise eine Zielreinheit nach ISO 4406 17/14/10 vorgegeben wird. Dann wird mit dem CS-Partikelzähler ermittelt, ob dieser erreicht ist und erst nach Erreichen wird eine Umschaltung zur teilweisen oder vollständigen Beaufschlagung der Getriebeschmierung V mit dem Öl durchgeführt. Der Partikelsensor CS1000 kann demgemäß in vorteilhafter Weise Verwendung finden. Die Verwendung eines Partikelsensors 42 der Baureihe MCS, erlaubt auch im Teilstrom die Ermittlung von Partikeln > 70*µ*m; ebenso kann bei kleinen Volumenströmen, die von der Pumpe 48 ausgangsseitig zur Verfügung gestellt werden, der MCS-Sensor auch im Vollstrom betrieben werden.

Es sei noch darauf hingewiesen, dass die Pumpen-Fördereinrichtung 48 auch aus mehreren einzelnen, miteinander verbindbaren oder verbundenen Hydropumpen bestehen kann, die zum Teil elektromotorisch; zum Teil aber auch durch Vorgelege per mechanischem Antrieb durch das jeweilige Getriebe angetrieben werden.

Des Weiteren kann in die weitere fluidführende Leitung 32 abströmseitig eine Blende oder Drossel geschaltet sein, zu der parallel und optional in einer Bypassleitung eine Differenzdruckmesseinrichtung (nicht dargestellt) geschaltet ist. Dergestalt kann der Teilvolumenstrom in der weiteren Leitung 32 ermittelt und mit dem Gesamtvolumenstrom verglichen werden, um dergestalt einen etwaigen Schmiermangel zu vermeiden. Notfalls führt dies zur Abschaltung der Gesamtanlage oder das Ventil 36 wird anders voreingestellt. Ergänzend sei darauf hingewiesen, dass bei Einsatz eines Kugelhahnes, wie in Figur 2 dargestellt, dessen Antrieb elektrisch und/oder manuell konzipiert sein kann zwecks Erreichen der benötigten Schaltpositionen, wie dargestellt.

Demgemäß ist mit der erfindungsgemäßen Lösung ein Verfahren zum Betrieb eines Systems, wie vorstehend vorgestellt, durchführbar, welches zum Vermeiden von Partikelverschmutzung auf einer Verbraucherseite V etwaig verschmutztes Fluid aus einer Fluidführung 24 mittels einer Ausschleuseinrichtung 28 vorab zeitnah ausschleust.

## Patentansprüche

1. System zur Fluidversorgung mindestens eines Verbrauchers (V), insbesondere zur Schmiermittelversorgung von Verbrauchern (V), wie Lagerstellen in Getrieben von Windkraftanlagen einschließlich Gleitlagern, zumindest bestehend aus einer
- Fördereinrichtung (12),
- Filtereinrichtung (14), und
- Wärmetauscheinrichtung (16),
die über fluidführende Leitungen (18, 20) miteinander verbunden und im Rahmen einer Fluidführung (24) entlang einer Strömungsrichtung (26) mit Fluid durchströmbar sind, **dadurch gekennzeichnet, dass** in Strömungsrichtung (26) gesehen hinter der Filtereinrichtung (14) eine Ausschleuseinrichtung (28) in die Fluidführung (24) geschaltet ist, die in mindestens einem Betätigungszustand das Fluid aus der Fluidführung (24) zumindest teilweise ausschleust und zumindest in einem anderen Betätigungszustand in der Fluidführung (24) in Richtung des jeweiligen Verbrauchers (V) belässt.

2. System nach Anspruch 1, **dadurch gekennzeichnet, dass** die Ausschleuseinrichtung (28) in eine fluidführende Leitung (20) zwischen der Filtereinrichtung (14) und der Wärmetauscheinrichtung (16) geschaltet ist.

3. System nach Anspruch 1 oder 2, **dadurch gekennzeichnet, dass** die Ausschleuseinrichtung (28) auf ihrer Ausschleusseite (30) über eine weitere fluidführende Leitung (32) an einen Vorratstank (34) angeschlossen ist, aus dem die Fördereinrichtung (12) bedarfsweise Fluid in die Fluidführung (24) einspeist.

4. System nach einem der vorstehenden Ansprüche, **dadurch gekennzeichnet, dass** die Ausschleuseinrichtung (28) ein Ventil (36) aufweist mit mindestens drei Fluidanschlüssen (1, 2, 3) und mindestens zwei voneinander verschiedenen Betätigungsstellungen.

5. System nach einem der vorstehenden Ansprüche, **dadurch gekennzeichnet, dass** das Ventil (36) in der einen betätigten Stellung das Ausschleusen von Fluid aus der Fluidführung (24) durchführt und in der anderen unbetätigten Stellung das Fluid im Fluidkreis in Strömungsrichtung (26) zur Wärmetauscheinrichtung (16) belässt.

6. System nach einem der vorstehenden Ansprüche, **dadurch gekennzeichnet, dass** das Ventil (36) aus einem 3-Wege-Umschaltventil (38), auch in handbetätigter Form, oder aus einem 3/2-Wege-Ventil (40), auch in Form eines elektro-magnetisch ansteuerbaren Stetigventiles, besteht.

7. System nach einem der vorstehenden Ansprüche, **dadurch gekennzeichnet, dass** mindestens ein Partikelsensor (42) in die Fluidführung (24) geschaltet ist, vorzugsweise in Strömungsrichtung (26) gesehen zwischen der Fördereinrichtung (12) und der Filtereinrichtung (14), und dass bei einem Überschreiten einer vorgebbaren Verschmutzungsschwelle durch auftretende Partikel der jeweilige Partikelsensor (24) einen Ausschleusvorgang aus der Fluidführung (24) unter Einsatz des jeweiligen Ventils (36), vorzugsweise automatisch, veranlasst.

8. System nach einem der vorstehenden Ansprüche, **dadurch gekennzeichnet, dass**
- die Fördereinrichtung (12) eine ansteuerbare Fluidpumpe (48) aufweist, die Fluid aus dem Vorratstank (34) entnimmt und in die Fluidführung (24) einspeist,
- die Filtereinrichtung (14) mindestens einen Partikelfilter (52) aufweist, und
- die Wärmetauscheinrichtung (16) einen Kühler (58) mit einem Bypassventil (60) aufweist, das insbesondere bei einem kalten, hochviskosen Fluid die Fluidströmung durch den Kühler (58) unterbindet oder zumindest drosselt und in einem entsprechend warmen niedrigviskosen Zustand des Fluids den Fluidweg durch den Kühler (58) freigibt.

9. System nach einem der vorstehenden Ansprüche, **dadurch gekennzeichnet, dass** das Bypassventil (60) aus ein Thermobypassventil gebildet ist.

10. Verfahren zum Betrieb eines Systems nach einem der vorstehenden Ansprüche, **dadurch gekennzeichnet, dass** zum Vermeiden von Partikelverschmutzung auf einer Verbraucherseite (V), etwaig verschmutztes Fluid aus einer Fluidführung (24) mittels einer Ausschleuseinrichtung (28) ausgeschleust wird.
